# EUROPÄISCHE PATENTSCHRIFT

(11) **EP 1 129 137 B1**
(45) Veröffentlichungstag und Bekanntmachung des Hinweises auf die Patenterteilung: **19.04.2006**
(21) Anmeldenummer: 99971827.3
(22) Anmeldetag: 05.11.1999
(51) Int. Cl.: C08L 61/28, C09D 161/28, C09D 5/03

(54) **PULVER-ZUSAMMENSETZUNG ZUR HERSTELLUNG WÄSSRIGER ÜBERZUGSMITTEL**
POWDER COMPOSITION FOR THE PRODUCTION OF AQUEOUS COATING AGENTS
COMPOSITION PULVERULENTE POUR LA PRODUCTION D'AGENTS DE RECOUVREMENT AQUEUX

(30) Priorität: 10.11.1998 DE 19861030
(43) Veröffentlichungstag der Anmeldung: 05.09.2001
(73) Patentinhaber: Permatex Gmbh, 71665 Vaihingen/Enz (DE)
(72) Erfinder: ÖCHSNER, Waldemar, D-71638 Ludwigsburg (DE); WEISS, Herbert, D-34376 Immenhausen (DE)
(74) Vertreter: Gille Hrabal Struck Neidlein Prop Roos
(86) Internationale Anmeldenummer: PCT/EP1999/008505
(87) Internationale Veröffentlichungsnummer: WO 2000/027919

(56) Entgegenhaltungen:
- DE-A- 3 801 456
- GB-A- 1 333 128
- GB-A- 1 497 118
- US-A- 4 210 725
- US-A- 4 269 944
- US-A- 4 442 157

## Beschreibung

Die Erfindung betrifft eine Pulver-Zusammensetzung, welche als wäßrige Dispersion geeignet ist für die Beschichtung von Metall-, Holz- und Kunststoffsubstraten, insbesondere auch von Stahl- und Betonsubstraten.

US-A-4 210 725 betrifft flammhemmende Materialien, die als Dichtungsstoffe beispielsweise in Zwischenräumen zwischen Türen und benachbarten Strukturen verwendet werden. Es handelt sich um pastenartige Materialien, die ein faserartiges Verstärkungsmaterial, wie Holzmehl, Glasfasern oder Nylonfasern enthalten. Die pastenförmige Zusammensetzung gemäß US-A-4 210 725 enthält 90 bis 11 Teile eines oder mehrerer Melaminharze, 90 bis 110 Teile Ammoniumphosphat, 45 bis 55 Teile Dicyandiamid oder Guanidin, 18 bis 22 Teile einer Polyhydroxyverbindung und 56 bis 69 Teile Wasser. Überzüge aus dieser Zusammensetzung sind nicht beschrieben.

Es sind eine Reihe von Beschichtungszusammensetzungen bekannt, die als wäßrige Dispersionen für die Beschichtung von oben genannten Substraten zum Einsatz kommen können.

Gemäß EP-A 384 506 wird eine wäßrige Beschichtungszusammensetzung verwendet, die neben Polyolen und Füllstoffen sowie gegebenenfalls Harnstoffharzen und einer Polyacrylatdispersion 15 bis 55 Gew.-% Melaminharze enthält, wobei die einzelnen Komponenten unter Rühren miteinander vermischt werden und mit Wasser versetzt werden. Als Härterkomponente dient eine wasserverdünnbare Säure. Die Überzugsmittel dienen der Beschichtung von Holzsubstraten, vorwiegend von Finish-Folien und Endloskanten.

Ähnliche Zusammensetzungen, welche darüber hinaus auch OH-gruppenhaltige Polyester enthalten können, werden beispielweise beschrieben in EP-A 541635 und DE-A 40 01 672. Gemäß EP-A 279 441 ist z.B. ein in einem wäßrigen Medium dispergiertes Melaminharz in Mengen von 5 bis 50 Gew.-% Bestandteil einer wäßrigen Beschichtungszusammensetzung.

Als Substrate dienen im wesentlichen Substrate der Möbel- und Plattenindustrie, darünter z.B. auch Papierfolien.

Die genannten Beschichtungszusammensetzungen sollen eine Resistenz gegenüber Wasser, bezogen auf die Feuchtigkeit von Innenräumen bewirken.

Beschichtungen im Außeneinsatz können jedoch anfällig sein durch Wassereinfluß und somit witterungsinstabil werden.

Weitere Eigenschaften wie Stabilität gegenüber Hitzeeinwirkung nach erfolgter Applikation der Beschichtungszusammensetzung, insbesondere auf Holzsubstrate, aber auch auf Stahl- und Betonsubstrate sind nicht gewährleistet.

Die Herstellung der wäßrigen Beschichtungsstoffe erfolgt üblicherweise durch Aufschlämmen bzw. Feinverteilen der einzelnen Komponenten in Wasser. Bei längeren Standzeiten und/ oder bei großen Schwankungen der Umgebungstemperatur während der Lagerung können Stabilitätsprobleme bzw. Probleme bei der Verarbeitung der wäßrigen Beschichtungsstoffe auftreten.

Aufgabe der Erfindung ist es daher, ein Verfahren zur Herstellung von Überzügen durch Auftrag einer Pulver-Zusammensetzung auf ein Substrat zu finden, wobei die Zusammensetzung keine Stabilitäts- und Verabreitungsprobleme bei langer Lagerung, insbesondere keine Froststabilitätsprobleme, aufweist und welche sich ohne großen Aufwand zu wäßrigen Beschichtungsstoffen verarbeiten läßt. Darüber hinaus sollen die erzielten Überzüge eine erhöhte Resistenz gegenüber Feuchte-Einfluß sowie einen Schutz gegenüber einer schnellen Aufheizung und Entzündung der Substrate bei Hitzeeinwirkung aufweisen.

Die Aufgabe wird gelöst durch ein Verfahren zur Herstellung von Überzügen durch Auftrag einer Pulver-Zusammensetzung in Form einer wäßrigen Dispersion auf ein Substrat, wobei eine Pulver-Zusammensetzung verwendet wird, die
A) 15 bis 30 Gew.-% ein oder mehrere Melaminharze,
B) 3 bis 30 Gew.-% ein oder mehrere mehrwertige Alkohole,
C) 10 bis 50 Gew.-% ein oder mehrere Phosphate und/ oder Polyphosphate und
D) 3 bis 30 Gew.-% ein oder mehrere Chlorparaffine und/ oder Melamin und/oder Melaminderivate und/oder Dicyandiamid enthält und wobei man die Dispersion auf **ein Substrat auf der Basis von Kunststoff, Beton, Stahl oder Holz aufträgt.**

**Darüber** hinaus können zusätzlich Additive wie beispielsweise Netzmittel, Emulgatoren, Thixotropiemittel, Farbpigmente, Füllstoffe und Mittel zur Steuerung der Reaktion enthalten sein.

Als Komponente A werden erfindungsgemäß als Bindemittel ein oder mehrere Melaminharze eingesetzt. Melaminharze sind Kondensationsprodukte, wie sie nach den bekannten Verfahren durch Umsetzung von Aldehyd, insbesondere von Formaldehyd, mit beispielsweise Benzoguanamin oder Melamin erhältlich sind. Sie können mit 1 bis 6 Kohlenstoffatome aufweisenden Alkanolen ganz oder teilweise verethert sein. Bevorzugt sind Melamin- Formaldehyd-Umsetzungsprodukte. Besonders geeignet sind Hexamethoximethylmelaminharze, beispielsweise die Handelsprodukte mit den Markennamen CYMEL 300, 302, 303.

Die Melaminharze werden in einer Menge von 15 bis 30 Gew.-%, bevorzugt über 15 Gew.-%, besonders bevorzugt 15 bis 20 Gew.-%, in der PulverZusammensetzung eingesetzt.

Als Komponente B kommen bevorzugt wasserunlösliche mehrwertige Alkohole zum Einsatz. Dies können mehrwertige Alkohole wie beispielsweise mehrwertige, verzweigte symmetrische und asymmetrische Alkohole, beispielsweise Pentaerythrit und Dipentaerythrit sein. Darüber hinaus können auch Kohlenhydrate wie Oligosaccharide, insbesondere höhere Oligosaccharide, sowie Polysaccharide, zum Einsatz kommen. Beispiele für derartige Kohlenhydrate sind Cellulose und Stärke.

Bevorzugt eingesetzt werden Pentaerythrit und Dipentaerythrit.

Die als Komponente C erfindungsgemäß einsetzbaren Phosphate und/oder Polyphosphate, welche insbesondere mit der Komponente B reagieren können, sind beispielsweise Ammoniumpolyphosphate.

Es können auch wasserlösliche Phosphate, beispielsweise Ammoniumphosphat bis zu einer Menge von 10 Gew.-% bis 50 Gew.-%, bezogen auf die Pulver-Zusammensetzung, verwendet werden.

Bervorzugt kommt Ammoniumpolyphosphat zum Einsatz.

Als Komponente D werden erfindungsgemäß Chlorparaffine, Melamin und/ oder Melaminderivate z.B. Melaminphosphate, Melamincyanurate, sowie Dicyandiamid eingesetzt. Sie dienen der Bildung von nicht brennbaren Gasen bei Einwirkung von Hitze. Besonders bevorzugt ist der Einsatz von Melamin und Melaminderivaten.

Gegebenfalls können in der Pulver-Zusammensetzung auch weitere Bindemittel in einer Menge bis zu 15 Gew.-%, bezogen auf die Zusammensetzung, enthalten sein. Dies können beispielsweise weitere vernetzende Harze wie Acrylatharze, Alkydharze, Acetatharze sein. Weiterhin können Dispersionspulver wie Vinylacetat-Copolymere, Vinylacetat-Vinylester-Copolymere, Styrolacrylate, Polyacrylate und Styrobutadien eingesetzt werden. Diese dienen unter anderem auch zur Verbesserung der Hafteingenschaften und der Flexibilität.

Neben den pulverförmigen Komponenten A - D können gegebenenfalls auch flüssige Komponenten A - D verwendet werden, soweit sie durch Sprühtrocknung vor ihrem Einsatz in der Pulver-Zusammensetzung in die Pulverform überführt werden können.

Gegebenenfalls kann die Pulverzusammensetzung auch expandierfähigen Graphit enthalten, welcher sich bei Hitzeeinwirkung ausdehnt. Dieser kann beispielsweise in Mengen von 0 Gew.-% bis 5 Gew.-%, bezogen auf die Pulver-Zusammensetzung, enthalten sein.

Neben den genannten Komponenten A bis D sind weitere Zusätze wie Additive möglich. Dies können sein Netzmittel, beispielsweise Calgon, Emulgatoren, Weichmacher, Thixotropiemittel, beispielsweise Kieselsäure, Farbpigmente, beispielsweise Titandioxid, Filmbildehilfsmittel, Entschäumer, Stabilisatoren, Entstaubungsmittel und weitere übliche Additive.

Flüssige Additivkomponenten können durch Sprühtrocknung in die entsprechende Pulverform überführt werden.

Es kann auch eine Kombination aus der Pulver-Zusammensetzung und weiteren Zusatzstoffen zur Herstellung der Beschichtungszusammensetzung verwendet werden. Derartige Zusatzstoffe können beispielsweise Aluminiumhydroxide und/ oder Borate, z.B. Zinkborat, sein und in einer Menge bis zu 10 Gew.-%, bezogen auf die Zusammensetzung, enthalten sein.

Die Pulver-Zusammensetzung kann in den zur Herstellung von Pulvermischungen üblichen Anlagen hergestellt werden, Falls erforderlich, können diese Zusammensetzungen mit den für diese Zwecke üblichen Aggregaten auf den gewünschten Korngrößenbereich vermahlen werden.

Die Pulver-Zusammensetzung kann in üblichen Gefäßen gelagert und transportiert werden.

Bei Bedarf, d.h. unmittelbar vor der Applikation, wird die Pulver-Zusammensetzung mit Wasser unter Rühren vermischt. Beispielsweise kann eine Mischung aus 40 bis 80 Gew.-% Pulver-Zusammensetzung und 60 bis 20 Gew.-% Wasser zum Einsatz kommen, bevorzugt eine Mischung aus 55 bis 75 Gew.-% Pulver-Zusammensetzung und 45 bis 25 Gew.-% Wasser. Gegebenenfalls können dabei Dispergierhilfsmittel und/oder andere übliche Additive mitverwendet werden.

Die Applikation erfolgt nach üblichen Verfahren und mit üblichen Vorrichtungen der Beschichtung, beispielsweise im Spritzverfahren oder durch Pinsel- oder Rollauftrag.

Die Pulver-Zusammensetzung *wird* als wäßrige Dispersion auf Metall-, Holz- und Kunststoffsubstrate, insbesondere auch Stahl- und Betonoberflächen erfindungsgemäß *aufgetragen*.

Die wäßrige Dispersion der Pulver-Zusammensetzung kann entweder direkt auf die unbehandelte Substratoberfläche oder auf die grundierte Oberfläche des Substrates aufgetragen werden. Beispielsweise kann die Substratoberfläche vor Applikation der Beschichtungszusammensetzung mit einem Korrosionsanstrich versehen sein.

Die wäßrige Dispersion kann in einer oder mehreren Schichten auf das Substrat aufgebracht werden.

Die Trockenschichtdicke des Überzuges beträgt in der Regel beispielsweise 200 µm bis 10 mm. Sie ist im Wesentlichen abhängig von der Art und vom Profil des Substrates. Hohlprofile bedürfen in der Regel höherer Schichtdicken.

Die Trocknung bzw. Härtung der Beschichtung kann bei Raum- oder Umgebungstemperatur erfolgen oder durch Erhöhung der Temperatur.

Über die Schicht auf Basis der Pulverzusammensetzung können weitere Schichten zum Schutz der Oberfläche vor Umwelteinflüssen appliziert werden. Dies ***kann*** ein geeigneter Deckanstrich beispielsweise auf Basis von PVC-Acrylaten sein, wobei die Deckschicht gleichzeitig der farblichen Gestaltung dienen kann, oder es kann eine Klarlack-Schicht aufgetragen werden.

Durch die Pulver-Zusammensetzung ist es möglich, lager- und temperaturstabile Zusammensetzungen zu erhalten, die in einfacher Weise und ohne wesentlichen Zeitaufwand zu anwendungsbereiten, wäßrigen Dispersionen im frisch zubereiteten Zustand verarbeitet werden können. Die Pulver-Zusammensetzungen sind damit von Lagerzeitraum und Temperatureinflüssen, insbesondere Frosteinflüssen, unabhängig. Dies ist vor allem deshalb wichtig, weil das einkomponentige System im wäßrigen Medium nur kurzzeitig stabil ist. Darüber hinaus kann der Transportaufwand auf Grund geringerer Transportmengen erheblich verringert werden, da die Pulver-Zusammensetzung erst am Ort der Applikation zur Herstellung der wäßrigen Dispersion mit den erforderlichen Wassermengen versetzt wird. Besonders überraschend ist, daß trotz der erfindungsgemäßen Verwendung von Melaminharzen als Bindemittel Überzüge erzielt werden können, die einen hohen Flammschutz und gleichzeitig eine sehr gute Feuchte- und Froststabilität gewährleisten und somit insbesondere für Substrate geeignet sind, die den Anforderungen des Brandschutzes entsprechen müssen.

Die Erfindung wird anhand folgender Beispiele erläutert:

### Beispiel 1

### Herstellung einer erfindungsgemäßen Pulver-Zusammensetzung

In einem Feststoffmischer werden 20 Gew.-Teile Hexamethylonmelamin, 20 Gew.-Teile Pentaerythrit, 10 Gew.-Teile Melamin, 40 Gew.-Teile Ammoniumpolyphosphat 10 Gew.-Teile Additive/Pigmente eingewogen und gemischt unter Bildung einer trockenen pulvrigen Mischung.

### Beispiel 2

### Herstellung einer Pulver-Dispersion

100 Gew.-Teile der Pulvermischung werden mit 25 Gew.-Teilen Wasser zu einer homogenen Dispersion angerührt in einem Zeitraum von ca. 3-4 Minuten und unmittelbar danach auf eine mit einem Grundanstrich versehene Stahlfläche aufgetragen.

## Patentansprüche

1. Verfahren zur Herstellung von Überzügen durch Auftrag einer Pulver-Zusammensetzung in Form einer wäßrigen Dispersion auf ein Substrat, **dadurch gekennzeichnet, daß** man eine Pulver-Zusammensetzung verwendet, die
A) 15 bis 30 Gew.-% ein oder mehrere Melaminharze,
B) 3 bis 30 Gew.-% ein oder mehrere mehrwertige Alkohole,
C) 10 bis 50 Gew.-% ein oder mehrere Phosphate und/oder Polyphosphate und
D) 3 bis 30 Gew.-% ein oder mehrere Chlorparaffine und/oder Melamin und/oder Melaminderivate und/oder Dicyandiamid enthält, und daß man die Dispersion auf ein Substrat auf der Basis von Kunststoff, Beton, Stahl oder Holz aufträgt.

2. Verfahren nach Anspruch 1, **dadurch gekennzeichnet, daß** als Komponente A Melaminharze auf der Basis von Melamin-Formaldehyd-Umsetzungsprodukten eingesetzt werden.

3. Verfahren nach Anspruch 1 oder 2, **dadurch gekennzeichnet, dass** als Komponente B Pentaerythrit eingesetzt wird.

4. Verfahren nach Anspruch 1 oder 2, **dadurch gekennzeichnet, daß** als Komponente B Dipentaerythrit eingesetzt wird.

5. Verfahren gemäß einem der Ansprüche 1 bis 3, **dadurch gekennzeichnet, daß** als Komponente D Melamin und/oder Melaminderivate verwendet werden.

6. Verfahren gemäß einem der Ansprüche 1 bis 5, **dadurch gekennzeichnet, daß** die Pulverzusammensetzung neben den Komponenten A bis D als weitere Zusatzstoffe Aluminiumhydroxid und/oder Zinkborat enthält.

7. Verfahren gemäß einem der Ansprüche 1 bis 6, **dadurch gekennzeichnet, daß** die Pulverzusammensetzung neben den Komponenten A bis D expandierfähigen Graphit ein einer Menge von 0 - 5 Gew.-% enthält.

8. Verfahren gemäß einem der Ansprüche 1 bis 7, **dadurch gekennzeichnet, daß** als Komponente A bis D flüssige Komponenten eingesetzt werden, welche vor ihrem Einsatz durch Sprühtrocknung in die Pulverform überführt wurden.

9. Verfahren gemäß einem der Ansprüche 1 bis 8, **dadurch gekennzeichnet, daß** eine wäßrige Dispersion verwendet wird, die durch Vermischen von 40 bis 80 Gew.-% der Pulver-Zusammensetzung und 20 bis 60 Gew.-% Wasser unter Rühren hergestellt wurde.

10. Verwendung einer Pulver-Zusammensetzung in Form einer wäßrigem Dispersion zur Herstellung von Überzügen auf Substraten auf der Basis von Kunststoff, Holz, Stahl und Beton, wobei die Pulver-Zusammensetzung
A) 15 bis 30 Gew.-% ein oder mehrere Melaminharze,
B) 3 bis 30 Gew.-% ein oder mehrere mehrwertige Alkohole,
C) 10 bis 50 Gew.-% ein oder mehrere Phosphate und/oder Polyphosphate und
D) 3 bis 30 Gew.-% ein oder mehrere Chlorparaffine und/oder Melamin und/oder Melaminderivate und/oder Dicyandiamid enthält.

## Claims

1. A process for preparing coatings by applying a powder composition in the form of an aqueous dispersion on a substrate, **characterised in that** a powder composition is used which contains
A) 15 to 30 wt.% of one or more melamine resins,
B) 3 to 30 wt.% of one or more polyhydric alcohols,
C) 10 to 50 wt.% of one or more phosphates and/or polyphosphates and
D) 3 to 30 wt.% of one or more chloroparaffins and/or melamine and/or melamine derivatives and/or dicyanodiamide, and that the dispersion is applied to a substrate based on plastics, concrete, steel or wood.

2. A process according to Claim 1, **characterised in that** melamine resins based on melamine/formaldehyde reaction products are used as component A.

3. A process according to Claim 1 or 2, **characterised in that** pentaerythritol is used as component B.

4. A process according to Claim 1 or 2, **characterised in that** dipentaerythritol is used as component B.

5. A process according to one of Claims 1 to 3, **characterised in that** melamine and/or melamine derivatives are used as component D.

6. A process according to one of Claims 1 to 5, **characterised in that** the powder composition contains aluminium hydroxide and/or zinc borate as further added substances in addition to components A to D.

7. A process according to one of Claims 1 to 6, **characterised in that** the powder composition contains expandable graphite in an amount of 0 - 5 wt.%, in addition to components A to D.

8. A process according to one of Claims 1 to 7, **characterised in that** liquid components which have been converted into the powder form by spray-drying prior to their use are used as components A to D.

9. A process according to one of Claims 1 to 8, **characterised in that** an aqueous dispersion is used which has been prepared by blending 40 to 80 wt.% of the powder composition and 20 to 60 wt.% of water, with stirring.

10. Use of a powder composition in the form of an aqueous dispersion for preparing coatings on substrates based on plastics, wood, steel and concrete, wherein the powder composition contains
A) 15 to 30 wt.% of one or more melamine resins,
B) 3 to 30 wt.% of one or more polyhydric alcohols,
C) 10 to 50 wt.% of one or more phosphates and/or polyphosphates and
D) 3 to 30 wt.% of one or more chloroparaffins and/or melamine and/or melamine derivatives and/or dicyanodiamide.

## Revendications

1. Procédé de production de revêtements par application d'une composition pulvérulente sous forme d'une dispersion aqueuse sur un substrat, **caractérisé en ce que** l'on utilise une composition pulvérulente, qui contient
A) 15 à 30 % en poids d'une ou de plusieurs résines de mélamine,
B) 3 à 30 % en poids d'un ou de plusieurs alcools polyvalents,
C) 10 à 50 % en poids d'un ou de plusieurs phosphates et/ou polyphosphates et
D) 3 à 30 % en poids d'une ou de plusieurs paraffines chlorées et/ou mélamines et/ou dérivés de mélamine et/ou dicyanodiamide, et **en ce que** l'on applique la dispersion sur un substrat à base de plastique, béton, acier ou bois.

2. Procédé selon la revendication 1, **caractérisé en ce que** l'on met en oeuvre à titre de composant A des résines de mélamine à base de produits de réaction mélamine - formaldéhyde.

3. Procédé selon la revendication 1 ou 2, **caractérisé en ce que** l'on met en oeuvre le pentaérythrite à titre de composant B.

4. Procédé selon la revendication 1 ou 2, **caractérisé en ce que** l'on met en oeuvre le dipentaérythrite à titre de composant B.

5. Procédé selon l'une des revendications 1 à 3, **caractérisé en ce que** l'on utilise la mélamine et/ou des dérivés de mélamine à titre de composant D.

6. Procédé selon l'une des revendications 1 à 5, **caractérisé en ce que** la composition pulvérulente contient, hormis les composants A à D, de l'hydroxyde d'aluminium et/ou du borate de zinc à titre d'autres additifs.

7. Procédé selon l'une des revendications 1 à 6, **caractérisé en ce que** la composition pulvérulente contient, hormis les composants A à D, un graphite expansible en une quantité de 0 à 5 % en poids.

8. Procédé selon l'une des revendications 1 à 7, **caractérisé en ce que** l'on met en oeuvre, à titre de composants A à D, des composants liquides qui ont été transformés en forme pulvérulente par séchage par pulvérisation avant leur mise en oeuvre.

9. Procédé selon l'une des revendications 1 à 8, **caractérisé en ce que** l'on utilise une dispersion aqueuse qui a été préparée par mélange de 40 à 80 % en poids de la composition pulvérulente et 20 à 60 % en poids d'eau sous agitation.

10. Utilisation d'une composition pulvérulente sous forme d'une dispersion pour la fabrication de revêtements sur des substrats à base de plastique, béton, acier ou bois, la composition pulvérulente contenant :
A) 15 à 30 % en poids d'une ou de plusieurs résines de mélamine,
B) 3 à 30 % en poids d'un ou de plusieurs alcools polyvalents,
C) 10 à 50 % en poids d'un ou de plusieurs phosphates et/ou polyphosphates et
D) 3 à 30 % en poids d'une ou de plusieurs paraffines chlorées et/ou mélamines et/ou dérivés de mélamine et/ou dicyanodiamide.
